# EUROPEAN PATENT APPLICATION

(11) **EP 2 889 124 A1**
(43) Date of publication of application: **01.07.2015**
(21) Application number: 14195508.8
(22) Date of filing: 28.11.2014
(51) Int. Cl.: B29C 67/00, B33Y 10/00

(54) **Three dimensional printer and control method thereof**

(30) Priority: 31.12.2013 KR 20130169141
(71) Applicant: Samsung Electronics Co., Ltd, Gyeonggi-do 443-742 (KR)
(72) Inventor: Kuk, Keon, Gyeonggi-do (KR); Beak, O Hyun, Seoul (KR); Park, Jong Woon, Gyeonggi-do (KR); Jung, Yeon Kyoung, Seoul (KR); Han, Eun Bong, Gyeonggi-do (KR)
(74) Representative: Taor, Simon Edward William

(57) **Abstract**

A three dimensional printer (100) sprays and solidifies liquid ink to build a three dimensional object (400) prevents implementation of unintended color due to a mix of different color ink, and increases three dimensional printing speed by enhancing the process of spraying and solidifying the ink. The control method of the three dimensional printer (100) for building a three dimensional object (400) by laminating a plurality of layers (302, 304, 306, 402, 404, 406) includes forming first areas not adjacent to each other in one of the plurality of layers (302, 304, 306, 402, 404, 406) and solidifying the first areas; and forming second areas adjacent to the solidified first areas and solidifying the second areas.

## Description

The following description relates to a three dimensional printer and control method thereof.

Ink jetting, a type of three dimensional (3D) printing process of building up an object, has two types: binder jetting and material jetting. The binder jetting is a process of spraying binder and color pigments onto a material in powdered form, and implementing 3D color printing by combining the material with color pigments.

However, this process is considered inappropriate for the 3D printer for individual users because it has to prepare and flatten a powered material, and perform post-processing on the material, such as surface coating. In contrast, material jetting is appropriate for the 3D printer for individual users because it uses liquid curable color ink to be sprayed and solidified, thereby providing a relatively clean working environment.

In order for the 3D printer to build up a 3D object, steps of spraying and solidifying ink are involved in the material jetting process. In this case, if a color ink is sprayed near another color ink having not yet been solidified, unintended color likely results due to blending of the colors. In addition, separate processes of spraying and solidifying ink may inevitably increase the processing time.

The following description relates to a three dimensional (3D) printer for spraying and solidifying liquid ink to build a 3D object to prevent implementation of unintended color due to a mix of different color ink and increase 3D printing speed by enhancing the process of spraying and solidifying the ink.

In accordance with an aspect of the present disclosure, a control method of the 3D printer for building a 3D object by laminating a plurality of layers includes forming first areas not adjacent to each other in one of the plurality of layers and solidifying the first areas; and forming second areas not adjacent to each other in the layer between the solidified first areas and solidifying the second areas.

Each of the first area and the second area may include at least one cell, which is a minimum sized picture element implemented by the 3D printer.

Each of the first area and the second area may include at least one block that includes a plurality of cells.

The areas not adjacent to each other may have borders of a predetermined size shared with neighboring areas.

In accordance with an aspect of the present disclosure, a control method of a three dimensional (3D) printer for building a 3D object by laminating a plurality of layers includes forming one of the plurality of layers, wherein the layer is formed by spraying ink of a designated color onto first areas not adjacent to each other; solidifying the ink sprayed onto the first area; spraying ink of a designated color onto second areas not adjacent to each other between the first areas; and solidifying the ink sprayed onto the second areas.

Each of the first area and the second area may include at least one cell, which is a minimum sized picture element implemented by the 3D printer.

Each of the first area and the second area may include at least one block that includes a plurality of cells.

The areas not adjacent to each other may have borders of a predetermined size shared with neighboring areas.

In accordance with an aspect of the present disclosure, a control method of a three dimensional (3D) printer for building a 3D object by laminating a plurality of layers is provided, wherein the plurality of layers includes a preceding layer and a subsequent layer laminated on the preceding layer. The control method includes forming first areas not adjacent to each other in the preceding layer and solidifying the first areas; and forming second areas not adjacent to each other in the preceding layer between the solidified first areas, and forming first areas not adjacent to each other in the subsequent layer on top of the solidified first areas of the preceding.

The control method may further include solidifying the second areas of the preceding layer together with the first areas of the subsequent layer.

Each of the first area and the second area may include at least one cell, which is a minimum sized picture element implemented by the 3D printer.

Each of the first area and the second area may include at least one block that includes a plurality of cells.

The areas not adjacent to each other may have borders of a predetermined size shared with neighboring areas.

In accordance with an aspect of the present disclosure, a control method of a three dimensional (3D) printer for building a 3D object by laminating a plurality of layers includes forming a neighboring first layer and second layer of the plurality of layers, wherein the neighboring first layer and second layer of the plurality of layers are formed by spraying ink of a designated color onto first areas not adjacent to each other in the first layer; solidifying the ink sprayed onto the first areas in the first layer; spraying ink of a designated color onto second areas not adjacent to each other between the first areas of the first layer, and spraying ink of a designated color onto the solidified first areas of the first layer to form first areas not adjacent to each other in the second layer; solidifying the ink sprayed onto the second areas of the first layer and the ink sprayed onto the first areas of the second layer; spraying ink of a designated color onto second areas not adjacent to each other between the first areas of the second layer; and solidifying the ink sprayed onto the second areas of the second layer.

Each of the first area and the second area may include at least one cell, which is a minimum sized picture element implemented by the 3D printer.

Each of the first area and the second area may include at least one block that includes a plurality of cells.

The areas not adjacent to each other may have borders of a predetermined size shared with neighboring areas.

In accordance with an aspect of the present disclosure, a three dimensional (3D) printer for building a 3D object by laminating a plurality of layers includes an inkjet head equipped with multiple nozzles for spraying ink; a light source for solidifying the sprayed ink; a stage on which an object is formed with the ink sprayed from the inkjet head; and a controller for performing 3D printing based on printing data, wherein the controller further forms first areas not adjacent to each other in one of the plurality of layers and solidifies the first areas; and forms second areas not adjacent to each other in the layer between the solidified first areas and solidifies the second areas.

Each of the first area and the second area may include at least one cell, which is a minimum sized picture element implemented by the 3D printer.

Each of the first area and the second area may include at least one block that includes a plurality of cells.

The light source may include an ultraviolet (UV) light source.

The areas not adjacent to each other have borders of a predetermined size shared with neighboring areas.

In accordance with an aspect of the present disclosure, a three dimensional (3D) printer for building a 3D object by laminating a plurality of layers includes an inkjet head equipped with multiple nozzles for spraying ink; a light source for solidifying the sprayed ink; a stage on which an object is formed with the ink sprayed from the inkjet head; and a controller for performing 3D printing based on printing data, wherein the controller further forms first areas not adjacent to each other in a preceding layer of the plurality of layers and solidifies the first areas, forms second areas not adjacent to each other in the preceding layer between the solidified first areas, and forms first areas not adjacent to each other in a subsequent layer on top of the solidified first areas of the preceding layer.

The controller may control the second areas of the preceding layer and the first areas of the subsequent layer to be solidified together.

Each of the first area and the second area may include at least one cell, which is a minimum sized picture element implemented by the 3D printer.

Each of the first area and the second area may include at least one block that includes a plurality of cells.

The light source may include an ultraviolet (UV) light source.

The areas not adjacent to each other have borders of a predetermined size shared with neighboring areas.

According to an aspect of the invention, there is provided a control method as set out in claim 1. Preferred features are set out in claims 2 to 6.

According to an aspect of the invention, there is provided a three dimensional (3D) printer as set out in claim 7. Preferred features are set out in claims 2 to 12.

According to the embodiments of a present disclosure, a three dimensional (3D) printer that sprays and solidifies liquid ink to build a 3D object prevents implementation of unintended color due to a mix of different color ink, and increases 3D printing speed by enhancing the process of spraying and solidifying the ink.

Other aspects, advantages, and salient features of the disclosure will become apparent to those skilled in the art from the following detailed description, which, taken in conjunction with the annexed drawings, discloses exemplary embodiments of the disclosure.

The above and other features and advantages of the present disclosure will become more apparent by describing in detail exemplary embodiments thereof with reference to the attached drawings in which:
FIG. 1 is a perspective view of a three dimensional (3D) printer, according to an embodiment of the present disclosure;
FIG. 2 is a block diagram illustrating a control system of a 3D printer, according to an embodiment of the present disclosure
FIGS. 3A, 3B, 3C, 3D, 3E, 3F, and 3G illustrate 3D printing operations of a 3D printer, according to an embodiment of the present disclosure;
FIG. 4 illustrates an object implemented by a 3D printer, according to an embodiment of the present disclosure;
FIG. 5 illustrates an exploded view of the object shown in FIG. 4, which shows individual layers separately;
FIGS. 6A, 6B, 6C, and 6D illustrate a process of generating a first layer of the object shown in FIGS. 4 and 5;
FIGS. 7A, 7B, 7C, and 7D illustrate a process of generating a second layer of the object shown in FIGS. 4 and 5;
FIGS. 8A, 8B, 8C, and 8D illustrate a process of generating a third layer of the object shown in FIGS. 4 and 5;
FIGS. 9A, 9B, 9C, and 9D illustrate a process of generating a first layer of the object shown in FIGS. 4 and 5;
FIGS. 10A and 10B illustrate a process of generating a second layer of the object shown in FIGS. 4 and 5; and
FIGS. 11A and 11B illustrate a process of generating a third layer of the object shown in
FIGS. 4 and 5.

Throughout the drawings, like reference numerals will be understood to refer to like parts, components, and structures.

Reference will now be made in detail to the embodiments, examples of which are illustrated in the accompanying drawings, wherein like reference numerals refer to the like elements throughout. The embodiments are described below to explain the present invention by referring to the figures.

The present disclosure will now be described more fully with reference to the accompanying drawings, in which exemplary embodiments of the disclosure are shown. The disclosure may, however, be embodied in many different forms and should not be construed as being limited to the embodiments set forth herein; rather, these embodiments are provided so that this disclosure will be thorough and complete, and will fully convey the concept of the disclosure to those skilled in the art. Like reference numerals in the drawings denote like elements, and thus their description will be omitted.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present disclosure. The terminology used herein is for the purpose of describing particular embodiments only and is not intended to be limiting of the invention. It is to be understood that the singular forms "a," "an," and "the" include plural references unless the context clearly dictates otherwise.

The term "include (or including)" or "comprise (or comprising)" is inclusive or openended and does not exclude additional, unrecited elements or method steps. "Unit", "module", "block", etc. used herein each represent a unit for handling at least one function or operation, and may be implemented in hardware, software, or a combination thereof.

The invention may, however, be embodied in many different forms and should not be construed as being limited to the embodiments set forth herein; rather, these embodiments are provided so that this disclosure will be thorough and complete, and will fully convey the concept of the invention to those skilled in the art. Like reference numerals in the drawings denote like elements, and thus their description will be omitted.

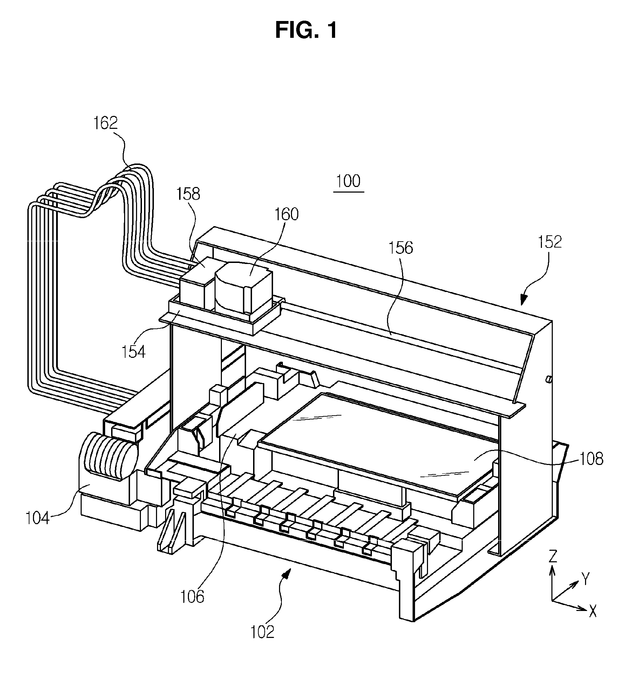

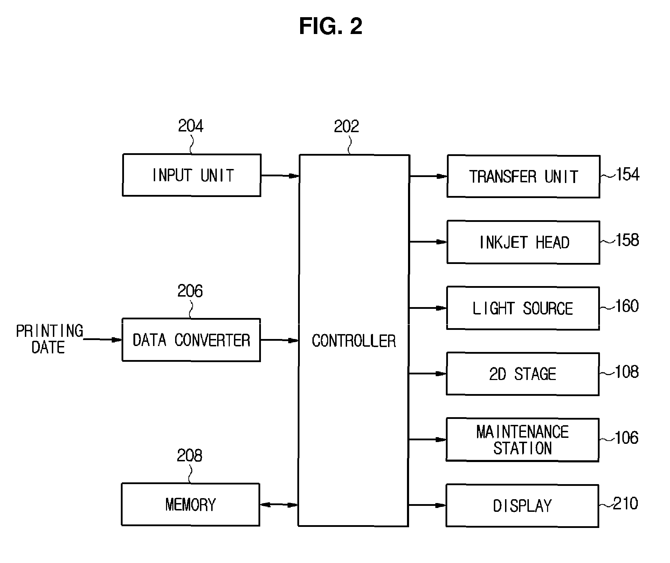

FIG. 1 is a perspective view of a three dimensional (3D) printer, according to an embodiment of the present disclosure. Illustrated in particular is an internal structure of a 3D printer 100 according to an embodiment of the present disclosure, which may further be equipped with a case for defining the appearance of the 3D printer 100 and protecting the internal devices. The 3D printer 100 is divided into a main body 102 and a bracket 152. Additionally, the 3D printer 100 may further include a main board mounted with a controller 202 for controlling general 3D printing operations and peripheral circuits, a power supply for supplying power, an input unit 204 for generating input signals corresponding to user manipulation, and a display 210, such as a Liquid Crystal Display (LCD), which will be described in detail in connection with FIG. 2.

The main body 102 includes an ink supplier (or ink container) 104, a maintenance station 106, and a two dimensional (2D) stage 108. The ink container 104 is loaded with a great amount of ink of various colors: cyan, magenta, yellow and black, each ink color supplied to an inkjet head 158 through a corresponding ink supply tube 162. Ink may be a liquid (resin) from melted photo curing plastic. The maintenance station 106 is where the inkjet head 158 regularly/irregularly moves into for maintenance/repair. If the inkjet head 158 moves into the maintenance station 106, cleaning work for the inkjet head 158 is performed. In addition, if the inkjet head 158 moves into the maintenance station 106, replacement work for the inkjet head 158 may also be performed. The 2D stage 108 is where the 3D printing job is performed, and moves back and forth along yz-axis as represented in FIG. 1.

The bracket 152 includes a transfer unit 154 and a guide rail 156. The inkjet head 158 and a light source 160 are equipped in the transfer unit 154 and move with the transfer unit 154. The inkjet head 158 is also equipped with a number of ink nozzles through which drops of ink of different colors are sprayed in the ink jetting process. The ink container 104 and the inkjet head 158 are connected to each other through the ink supply tubes 162. Ink drops are supplied from the ink container 104 to the inkjet head 158 through the ink supply tubes 162. Ink (or resin) sprayed as a photo curing material from the inkjet head 158 is solidified when exposed to light (e.g., ultraviolet (UV)).

The UV light source 160 illuminates ink with light, solidifying the ink sprayed from the inkjet head 158 by having the ink exposed to light. If the ink sprayed from the inkjet head 158 is not the photo curing material, but rather a thermoset material, the light source 160 may be replaced by a heat source that radiates heat. The transfer unit 154 equipped with the inkjet head 158 and the light source 160 moves back and forth along the guide rail 156 on the x-axis represented in FIG. 1. While the transfer unit 154 is moving along the guide rail 156, the inkjet head 158 may spray drops of ink onto the 2D stage 108 and the light source 160 may illuminate the ink sprayed onto the 2D stage 108 with light. With 3D movement (on the xyz-axis) of the transfer unit 154 and the 2D stage 108, a product of 3D printing may be produced on the 2D stage 108.

FIG. 2 is a block diagram illustrating a control system of a 3D printer, according to an embodiment of the present disclosure. As shown in FIG. 2, input ends of a controller 202 for controlling overall operations of the 3D printer 100 are operatively and electrically coupled with an input unit 204, a data converter 206, and a memory 208.

Output ends of the controller 202 are operatively and electrically coupled with the transfer unit 154, the inkjet head 158, the light source 160, the 2D stage 108, the maintenance station 106, and a display 210.

At the input end of the controller 202, the input unit 204 generates input signals corresponding to user manipulation. The data converter 206 converts printing data into a format available to the controller 202. The printing data may be generated by the 3D printer 100 itself, or may be input to the 3D printer 100 from outside of the 3D printer 100 through a communication line. Further, an external storage device, such as a Universal Serial Bus (USB) memory, an external hard disk, or the like may send the printing data to the 3D printer 100. The memory 208 stores the received printing data, or stores software programs for the controller 202 to control overall operations of the 3D printer 100.

The transfer unit 154, the inkjet head 158, the light source 160, the 2D stage 108, and the maintenance station 106 at the output end of the controller 202 were described above in connection with FIG. 1. The display 210 displays operating status information and user setting information of the 3D printer 100.

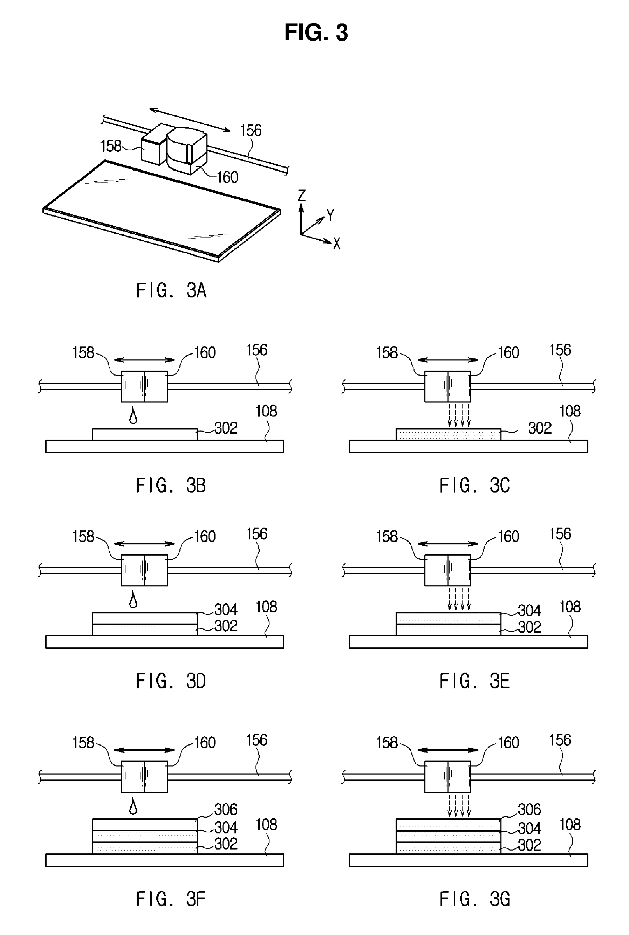

FIGS. 3A-3G illustrate 3D printing operations of a 3D printer, according to an embodiment of the present disclosure. Specifically, FIG. 3A only illustrates the inkjet head 158 and the light source 160 that move back and forth along the guide rail 156 on the x-axis, and the 2D stage 108, from the 3D printer 100 shown in FIG. 1. FIGS. 3B to 3G illustrate what is shown in FIG. 3A as viewed along the y-axis. Specifically, FIGS. 3B to 3G illustrate a process of building a 3D object by performing 3D printing in the 3D printer 100, according to an embodiment of the present disclosure.

First, referring to FIG. 3A, while the inkjet head 158 and light source 160 are moving along the guide rail 156 on the x-axis (e.g., in left and right direction), the 2D stage 108 moves on the y-axis (e.g., in back and forth direction) and z-axis (e.g., in up and down direction). However, the embodiment is not limited to this movement. For example, the guide rail 156 may move along the y-axis, and the 2D stage 108 may move along the z-axis. To produce a 3D object, a product from the 3D printing, 3D movement of the inkjet head 158 and light source 160 relative to the 2D stage 108 in the xyz-axis direction is required.

A 3D printing process will now be described in connection with FIGS. 3B to 3G.

Referring to FIG. 3B, the controller 202 moves the 2D stage 108 upward on the z-axis to make the 2D stage 108 approach the inkjet head 158. While doing this, the controller 202 controls the inkjet head 158 to spray ink (resin) onto a top surface of the 2D stage 108 to form a first layer 302. The width and thickness of an area into which ink is sprayed from the inkjet head 158 to form the first layer 302 is determined from printing data input to the controller 202. In other words, ink is sprayed such an extent as to satisfy the width and thickness of the first layer 302 among the plurality of layers to form an intended object. The thickness of a single layer depends on a resolution (precision) to be attained for the intended object. The thicker the layer is, the lower the resolution (precision) becomes and the more severe the staircase effect may appear in curved parts of the surface of the object. On the contrary, the thinner the layer is, the higher the resolution (precision) becomes and the less the staircase effect becomes in curved parts of the surface of the object. The thickness of a layer may be from approximately 0.01mm to approximately 0.08mm, for example.

Upon completion of spraying ink to form the first layer 302, as shown in FIG. 3B, the controller 202 controls the light source 160 to illuminate the first layer 302 with UV, as shown in FIG. 3C. With the UV illumination with the light source 160, the first layer 302 is solidified. The UV illumination may take from approximately 0.3 seconds to approximately 1 second, depending on the thickness of a layer. In FIGS. 3A and 3B, non-solidified and solidified layers are distinguished by representing them in white (not shaded) and by shading, respectively. Throughout the following description, non-solidified and solidified layers will also be distinguished by representing them in white (not shaded) and by shading, respectively.

After completion of the first layer 302 as shown in FIGS. 3B and 3C, the controller 202 controls the inkjet head 158 to spray drops of ink (resin) onto the top surface of the solidified first layer to form a second layer 304. The width and thickness of an area into which ink is sprayed from the inkjet head 158 to form the second layer 304 is determined from printing data input to the controller 202. In other words, ink is sprayed to such an extent as to meet the width and thickness of the second layer 302 among a plurality of layers to form the intended object. To spray drops of ink to form the second layer 304, the 2D stage 108 may be moved downward along the z-axis as much as the thickness of the second layer 304. Upon completion of spraying ink to form the second layer 304, as shown in FIG. 3D, the controller 202 controls the light source 160 to illuminate the second layer 304 with UV, as shown in FIG. 3E. With the UV illumination with the light source 160, the second layer 304 is solidified.

After completion of the second layer 304 as shown in FIGS. 3D and 3E, the controller 202 controls the inkjet head 158 to spray drops of ink (resin) onto the top surface of the solidified second layer to form a third layer 306. The width and thickness of an area into which ink is sprayed from the inkjet head 158 to form the third layer 306 is determined from printing data input to the controller 202. In other words, ink is sprayed such an extent as to meet the width and thickness of the third layer 306 among the plurality of layers to form the intended object. To spray drops of ink to form the third layer 306, the 2D stage 108 may be moved downward along the z-axis as much as the thickness of the third layer 306. Upon completion of spraying ink to form the third layer 306, as shown in FIG. 3F, the controller 202 controls the light source 160 to illuminate the third layer 306 with UV, as shown in FIG. 3G. With the UV illumination with the light source 160, the third layer 306 is solidified.

While the first layer 302, the second layer 304, and the third layer 306 are being formed as shown in FIGS. 3B to 3G, in an attempt to implement a color on the intended object, one of a plurality of ink colors, e.g., cyan, magenta, yellow, and black loaded in the ink container 104 may be selectively sprayed to form the object in that color.

Furthermore, a medium ink color may be implemented by combining the plurality of ink colors of cyan, magenta, yellow, and black.

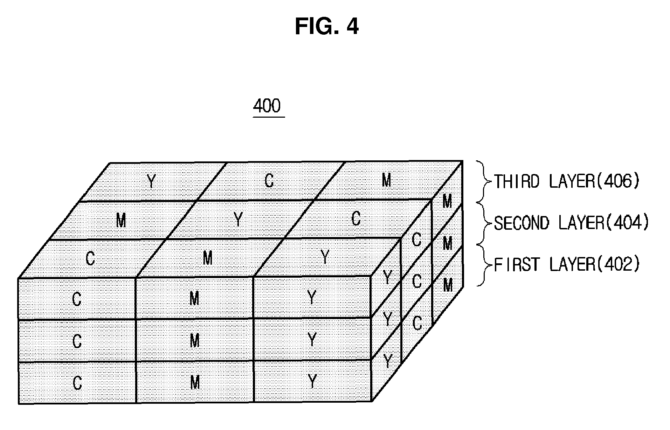

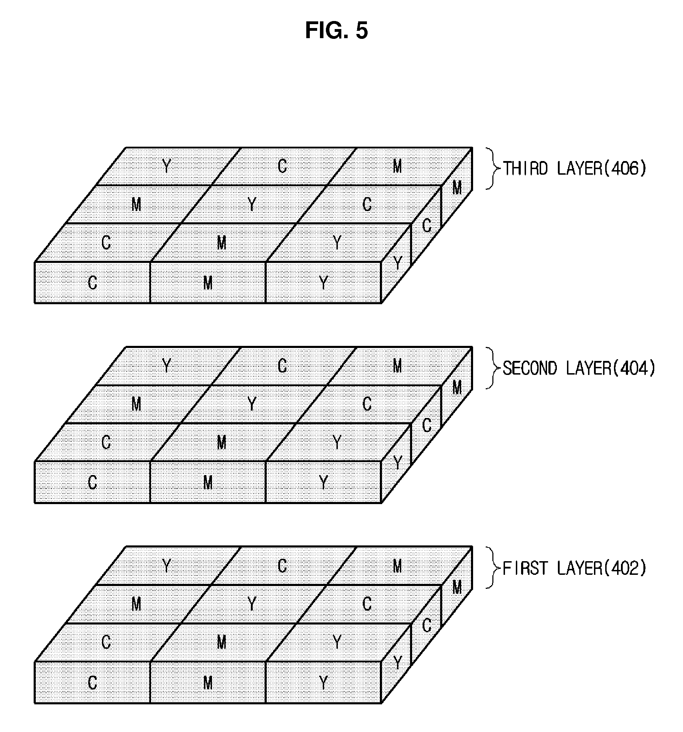

FIG. 4 illustrates an object implemented by a 3D printer, according to an embodiment of the present disclosure. FIG. 5 illustrates an exploded view of the object shown in FIG. 4, which shows individual layers separately. How to form individual layers of the object of FIG. 4 may be explained as shown in FIG. 5. An object 400 shown in FIGS. 4 and 5 may include three layers: a first layer 402, a second layer 404, and a third layer 406. The first layer 402, the second layer 404, and the third layer 406 each have a plurality of areas (cells or blocks) in different colors. The term 'cell' refers to a picture element, such as pixel of a 2D image or voxel of a 3D image, which may have a minimum size that may be implemented by the 3D printer 100 in accordance with an embodiment of the present disclosure. The term 'block' refers to a set of a plurality of neighboring cells in a single color. As shown in FIGS. 4 and 5, areas represented by C, M, and Y refer to cyan, magenta, and yellow colored areas, respectively. The respective areas may have different colors implemented in combination of cyan, magenta, yellow, and black colors.

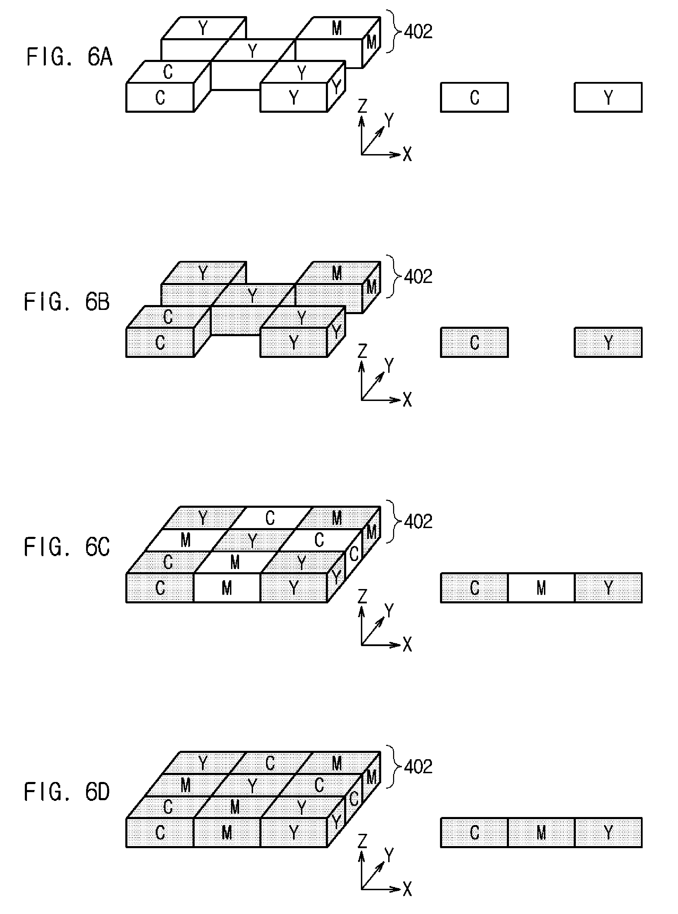

If areas in different colors of ink that has yet to be solidified are adjacent to each other, the non-solidified ink may be blended in the border between the areas, so that an unintended color may be implemented. In order for the 3D printer 100 in accordance with an embodiment of the present disclosure to prevent non-solidified ink of different colors from being blended in the border between neighboring areas in different colors while building a 3D object to be represented in such different colors, first and second embodiments of a control method of the 3D printer 100 may be used as below. FIGS. 6 to 8 illustrate a control method of a 3D printer, according to an embodiment of the present disclosure. The embodiment relates to a method for building the object shown in FIGS. 4 and 5 by using 3D printing. In the embodiment, multiple areas are combined to form an object. Further, the method as illustrated in FIGS. 6 to 8 may also be applied to embodiments for combining multiple blocks to form an object.

The control method of the 3D printer in accordance with the embodiment of the present disclosure, as shown in FIGS. 6 to 8, is characterized by forming first areas not adjacent to each other in one of a plurality of layers and solidifying the first areas, spraying drops of ink between the solidified first areas to form second areas not adjacent to each other in the same layer, and solidifying the second areas, thereby avoiding unintended color blending in the border between neighboring areas in different colors not yet solidified. The term 'neighboring areas' refer to areas that share a part of their borders in which unintended color implementation due to color blending may be a matter of concern. If the shared part of the borders of the neighboring areas is so small that such color blending there need not be worried about, the areas are not deemed to be adjacent to each other. In FIGS. 6 to 8, areas with non-solidified ink are represented in white while areas with solidified ink is represented with shading.

FIGS. 6A-6D illustrate a process of generating the first layer 402 of the object shown in FIGS. 4 and 5. As shown in FIG. 6A, the controller 202 controls the inkjet head 158 to spray ink to form areas not adjacent to each other in the first layer 402 with nine areas arranged in a 3x3 format. In FIG. 6A, areas in cyan C, yellow Y, and magenta M colors are formed with the sprayed ink. Although the ink in the areas has not yet been solidified, color blending may not occur in the border between the areas because the areas are not adjacent to each other. Next, the controller 202 controls the light source 160 to UV illuminate the ink sprayed as shown in FIG. 6A for solidification, as shown in FIG. 6B. Shaded areas of FIG. 6B represent solidified areas.

The controller 202 then controls the inkjet head 158 to spray ink between the solidified areas not adjacent to each other in the first layer 402 to form remaining areas of the first layer 402, as shown in FIG. 6C. As can be seen from FIG. 6C, since new areas are formed by spraying ink between the solidified areas (represented as shaded areas), even if the solidified areas and the new non-solidified areas are adjacent to each other, unintended color blending in the border of those areas may not occur. Upon completion of spraying ink to form the new areas for the first layer 402, the controller 202 controls the light source 160 to UV illuminate the new areas for solidification, as shown in FIG. 6D. As a result, the first layer 402 is completely formed through the successive procedures as shown in FIGS. 6A to 6D.

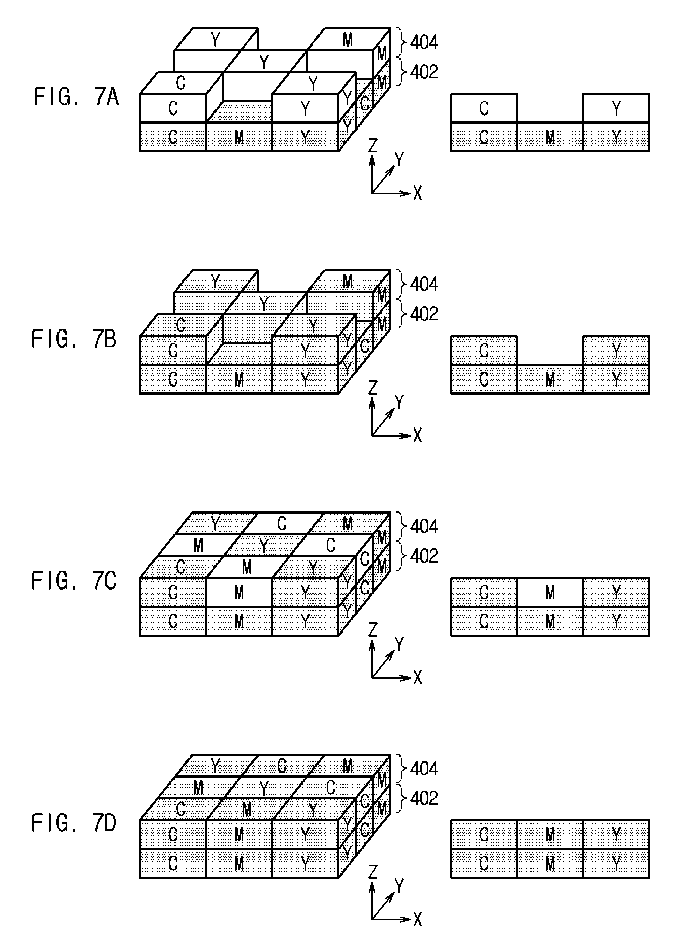

FIGS. 7A-7D illustrate a process of generating the second layer 404 of the object shown in FIGS. 4 and 5. As shown in FIG. 7A, the controller 202 controls the inkjet head 158 to spray ink onto the solidified first layer 402 to form areas not adjacent to each other in the second layer 404 with nine areas arranged in a 3x3 format. In FIG. 7A, areas in cyan C, yellow Y, and magenta M colors are formed with the sprayed ink. Although the ink in the areas has not yet been solidified, color blending may not occur in the border between the areas because the areas are not adjacent to each other. Furthermore, since the lower first layer 402 has already been solidified, the non-solidified ink sprayed onto the first layer 402 to form the second layer 404 may not cause color blending with the solidified ink of the first layer 402. Next, the controller 202 controls the light source 160 to UV illuminate the ink sprayed as shown in FIG. 7A for solidification, as shown in FIG. 7B. Shaded areas of FIG. 7B represent solidified areas.

The controller 202 then controls the inkjet head 158 to spray ink between the solidified areas not adjacent to each other in the second layer 404 to form remaining areas of the second layer 404, as shown in FIG. 7C. As can be seen from FIG. 7C, since new areas are formed by spraying ink between the solidified areas (represented as shaded areas), even if the solidified areas and the new non-solidified areas are adjacent to each other, unintended color blending in the border between those areas may not occur. Upon completion of spraying ink to form the new areas for the second layer 404, the controller 202 controls the light source 160 to UV illuminate the new areas for solidification, as shown in FIG. 7D. As a result, the second layer 404 is completely formed through the successive procedures as shown in FIGS. 7A to 7D.

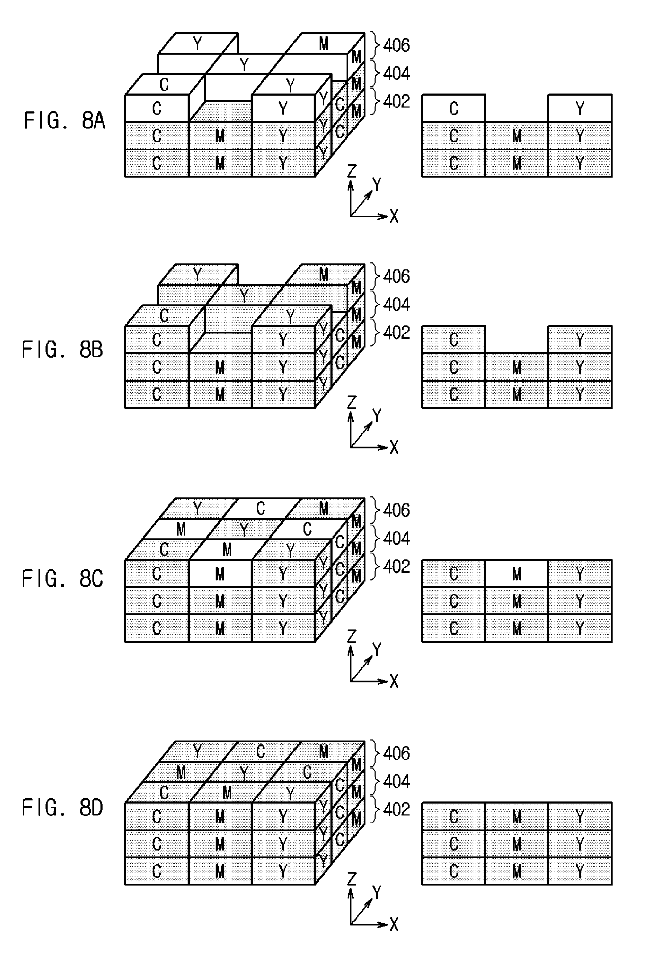

FIGS. 8A-8D illustrate a process of generating the third layer 406 of the object shown in FIGS. 4 and 5. As shown in FIG. 8A, the controller 202 controls the inkjet head 158 to spray ink onto the solidified second layer 404 solidified to form areas not adjacent to each other in the third layer 406 with nine areas arranged in a 3x3 format. In FIG. 8A, areas in cyan C, yellow Y, and magenta M colors are formed with the sprayed ink.

Although the ink in the areas has not yet been solidified, color blending may not occur in the border between the areas because the areas are not adjacent to each other. Furthermore, since the lower second layer 404 has already been solidified, the non-solidified ink sprayed onto the second layer 404 to form the third layer 406 may not cause color blending with the solidified ink of the second layer 404. Next, the controller 202 controls the light source 160 to UV illuminate the ink sprayed as shown in FIG. 8A for solidification, as shown in FIG. 8B. Shaded areas of FIG. 8B represent solidified areas.

The controller 202 then controls the inkjet head 158 to spray ink between the solidified areas not adjacent to each other in the third layer 406 to form remaining areas of the third layer 406, as shown in FIG. 8C. As can be seen from FIG. 8C, since new areas are formed by spraying ink between the solidified areas (represented as shaded areas), even if the solidified areas and the new non-solidified areas are adjacent to each other, unintended color blending in the border of those areas may not occur. Upon completion of spraying ink to form the new areas for the third layer 406, the controller 202 controls the light source 160 to UV illuminate the new areas for solifidication, as shown in FIG. 8D. As a result, the third layer 406 is completely formed through successive procedures as shown in FIGS. 8A to 8D.

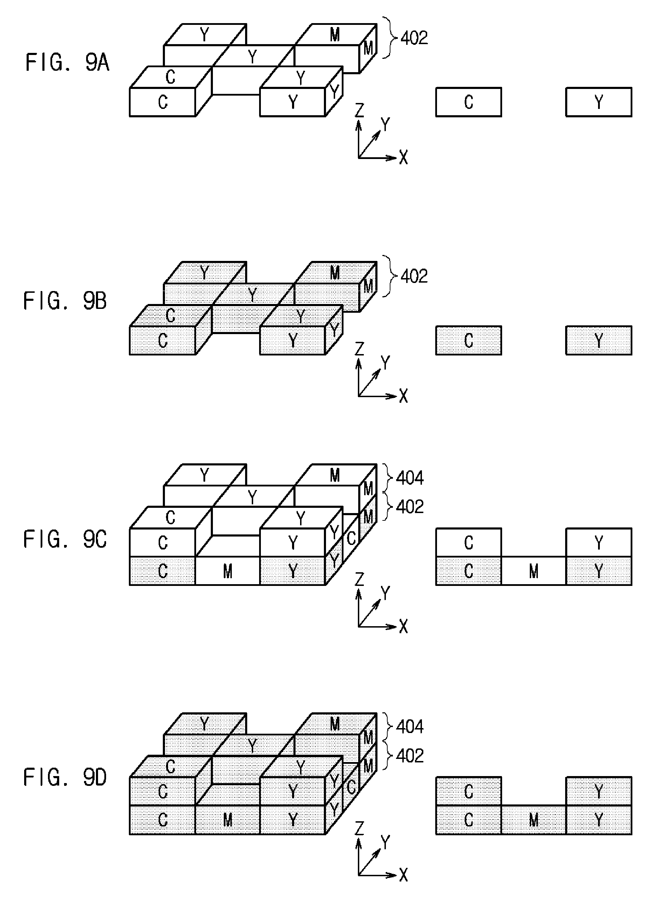

FIGS. 9 to 11 illustrate a control method of a 3D printer, according to an embodiment of the present disclosure. The embodiment relates to a method for building the object shown in FIGS. 4 and 5 by using 3D printing. In the embodiment, multiple areas are combined to form the object. Further, the method as illustrated in FIGS. 9 to 11 may also be applied to embodiments for combining multiple blocks to form an object.

The control method of the 3D printer in accordance with the embodiment of the present disclosure, as shown in FIGS. 9 to 11, is characterized by forming first areas not adjacent to each other in a preceding layer and solidifying the first areas, spraying drops of ink between the solidified first areas to form second areas not adjacent to each other in the same layer, and solidifying the second areas, thereby avoiding unintended color blending in the border between neighboring areas in different ink colors not yet solidified, wherein ink spraying for generating first areas not adjacent to each other in the subsequent layer and ink spraying for generating the second areas of the preceding layer are performed at a time, thereby increasing the printing speed as well. The term 'neighboring areas' refer to areas that share a part of their borders in which unintended color implementation due to color blending may be a matter of concern. If the shared part of the borders of the neighboring areas is so small that such color blending there need not be worried about, the areas are not deemed to be adjacent to each other. In FIGS. 9 to 11, areas with non-solidified ink are represented in white while areas with solidified ink are represented with shading.

FIGS. 9A-9D illustrate a process of generating the first layer 402 of the object shown in FIGS. 4 and 5. As shown in FIG. 9A, the controller 202 controls the inkjet head 158 to spray ink to form areas not adjacent to each other in the first layer 402 with nine areas arranged in a 3x3 format. In FIG. 9A, areas in cyan C, yellow Y, and magenta M colors are formed with the sprayed ink. Although the ink in the areas has not yet been solidified, color blending may not occur in the border between the areas because the areas are not adjacent to each other. Next, the controller 202 controls the light source 160 to UV illuminate the ink sprayed as shown in FIG. 9A for solidification, as shown in FIG. 9B. Shaded areas of FIG. 9B represent solidified areas.

The controller 202 then controls the inkjet head 158 to spray ink between the solidified areas not adjacent to each other in the first layer 402 to form remaining areas of the first layer 402, as shown in FIG. 9C, and simultaneously, controls the inkjet head 158 to spray ink onto the areas already solidified in the first layer 402 to form some areas for the second layer 404. In other words, ink spraying for forming the remaining areas of the first layer 402 and for forming some areas not adjacent to each other in the second layer 404 with nine areas arranged in a 3x3 format is performed at a same time. As can be seen from FIG. 9C, since new areas are formed by spraying ink between the solidified areas (represented as shaded areas), even if the solidified areas and the new non-solidified areas are adjacent to each other, unintended color blending in the border of those areas may not occur.

Upon completion of spraying ink to form the new areas for the first layer 402, the controller 202 controls the light source 160 to UV illuminate the new areas for solidification, as shown in FIG. 9D. As a result, the first layer 402 is completely formed through the successive procedures as shown in FIGS. 9A to 9D. Comparing the process shown in FIGS. 9A to 9D with that of FIGS. 6A to 6D, it can be seen that the former case (of FIGS. 9A to 9D) takes only four steps to form the first layer 402 as well as some areas of the second layer 404 and solidify them, but the latter case (of FIGS. 6A to 6D) takes four steps only to form the first layer 402. Accordingly, carrying out ink spraying at a same time for forming some areas of the first layer 402 and some areas of the second layer 404 may significantly reduce the time spent on forming the areas of the first layer 402 and the areas of the second layer 404, compared with a case of separately carrying out ink spraying for forming the areas of the first layer 402 and the areas of the second area 404. Furthermore, carrying out UV illumination at a same time for solidifying some areas of the first layer 402 and some areas of the second layer 404 may significantly reduce the time spent on light illumination to solidify the areas of the first layer 402 and the areas of the second layer 404, compared with a case of separately carrying out light illumination to solidify the areas of the first layer 402 and the areas of the second area 404.

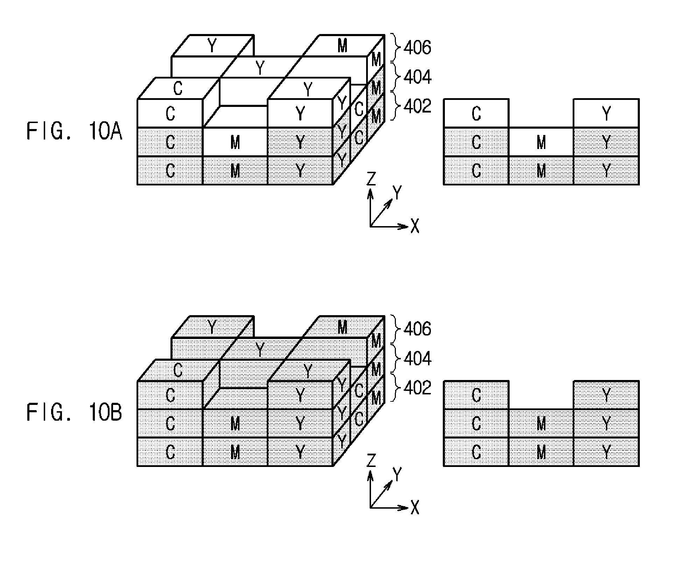

FIGS. 10A and 10B illustrate a process of generating the second layer 404 of the object shown in FIGS. 4 and 5. As shown in FIG. 10A, the controller 202 controls the inkjet head 158 to spray ink between the solidified areas not adjacent to each other to form remaining areas of the second layer 404 with nine areas arranged in a 3x3 format and to form new areas not adjacent to each other in the third layer 406 (see non-solidified areas in FIG. 10A). In other words, ink spraying for forming the remaining areas of the second layer 404 and for forming some areas not adjacent to each other in the third layer 406 with nine areas arranged in a 3x3 format is performed at a same time. In FIG. 10A, areas in cyan C, yellow Y, and magenta M colors are formed with the sprayed ink. Although the ink in the areas of the third layer 406 has not yet been solidified, color blending may not occur in the border between the areas because the areas are not adjacent to each other. Furthermore, since the areas formed not to be adjacent to each other in the lower second layer 404 have already been solidified, color blending in the border between the areas may not occur. Furthermore, since all the areas of the lower first layer 402 have already been solidified, the non-solidified ink sprayed onto the first layer 402 to form the remaining areas of the second layer 404 may not cause color blending with the solidified ink of the first layer 402.

Next, the controller 202 controls the light source 160 to UV illuminate the ink sprayed as shown in FIG. 10A for solidification, as shown in FIG. 10B. Shaded areas of FIG. 10B represent solidified areas. As a result, the second layer 404 is completely formed through the successive procedures as shown in FIGS. 10A and 10B. Comparing the process illustrated in FIGS. 10A and 10B with that of FIGS. 7A to 7D, it can be seen that the former case (of FIGS. 10A and 10B) takes two steps to form some areas of the second layer 404 as well as the third layer 406 and solidify them, but the latter case (of FIGS. 7A to 7D) takes four steps to form the second layer 404. Accordingly, carrying out ink spraying at a same time for forming some areas of the second layer 404 and for forming some areas of the third layer 406 may significantly reduce the time spent on forming the areas of the second layer 404 and the areas of the third layer 406, compared with a case of separately carrying out ink spraying for forming the areas of the second layer 404 and for forming the areas of the third area 406. Furthermore, carrying out UV illumination at a same time for solidifying some areas of the second layer 404 and for solidifying some areas of the third layer 406 may significantly reduce the time spent on light illumination to solidify the areas of the second layer 404 and the areas of the third layer 406, compared with a case of significantly carrying out light illumination to solidify the areas of the second layer 404 and the areas of the third area 404.

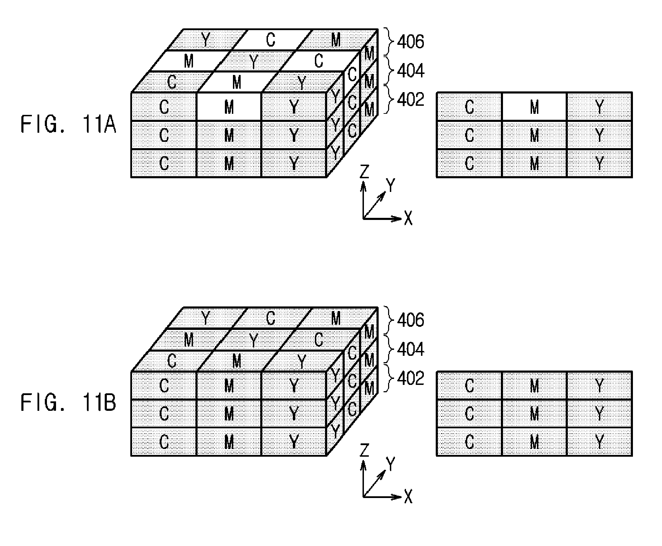

FIGS. 11A and 11B illustrate a process of generating the third layer 406 of the object shown in FIGS. 4 and 5. As shown in FIG. 11A, the controller 202 controls the inkjet head 158 to spray ink between solidified areas not adjacent to each other to form remaining areas of the third layer 406 with nine areas arranged in a 3x3 format (see non-solidified areas in FIG. 11A). In FIG. 11A, areas in cyan C, yellow Y, and magenta M colors are formed with the sprayed ink. Although the ink in the areas of the third layer 406 has not yet been solidified, color blending may not occur in the border between the areas of the third layer 406 because the areas are not adjacent to each other. Furthermore, since the areas formed not to be adjacent to each other in the lower second layer 404 has already been solidified, color blending in the border between areas of the second layer 404 and third layer 406 may not occur.

Next, the controller 202 controls the light source 160 to UV illuminate the ink sprayed as shown in FIG. 11A for solidification, as shown in FIG. ₁₁B. Shaded areas of FIG. 11B represent solidified areas. As a result, the third layer 406 is completely formed through the successive procedures as shown in FIGS. 11A and 11B. Comparing the process illustrated in FIGS. 11A and 11B with that of FIGS. 8A to 8D, it can be seen that the former case (of FIGS. 11A and 11B) takes two steps to form the third layer 406, but the latter case (of FIGS. 8A to 8D) takes four steps to form the third layer 406.

Accordingly, carrying out ink spraying at a same time for forming some areas of the second layer 404 and for forming some areas of the third layer 406 may significantly reduce the time spent on forming the areas of the second layer 404 and the areas of the third layer 406, compared with a case of separately carrying out ink spraying for forming the areas of the second layer 404 and for forming the areas of the third area 406. Furthermore, carrying out UV illumination at a same time for solidifying some areas of the second layer 404 and for solidifying some areas of the third layer 406 may significantly reduce the time spent on light illumination to solidify the areas of the second layer 404 and the areas of the third layer 406, compared with a case of significantly carrying out light illumination to solidify the areas of the second layer 404 and the areas of the third area 404.

As discussed, embodiments of the invention can provide a control method of a three dimensional (3D) printer for building a 3D object, the control method comprising: forming first areas not adjacent to each other and solidifying the first areas; and forming second areas adjacent to the solidified first areas, and solidifying the second areas.

In some embodiments, the method further comprises laminating a first layer and a second layer laminated on the first layer; forming the first areas not adjacent to each other in the first layer and solidifying the first areas; and forming second areas adjacent to the solidified first areas in the first layer, and forming first areas in the second layer on top of the solidified first areas of the first layer.

Embodiments of the invention can also provide a three dimensional (3D) printer for building a 3D object, the 3D printer comprising: an inkjet head equipped with multiple nozzles for spraying ink; a light source for solidifying the sprayed ink; a stage on which an object is formed with the ink sprayed from the inkjet head; and a controller for performing 3D printing based on printing data, wherein the controller is arranged to form first areas not adjacent to each other and to solidify the first areas; and to form second areas adjacent to the solidified first areas and solidify the second areas.

In some embodiments, the controller is arranged to form the first areas not adjacent to each other in a first layer and to solidify the first areas, and to form second areas adjacent to the solidified first areas in the first layer and to form first areas in a second layer on top of the solidified first areas of the first layer.

Several embodiments have been described in connection with e.g., mobile communication terminals, but a person of ordinary skill in the art will understand and appreciate that various modifications can be made without departing the scope of the present disclosure. Thus, it will be apparent to those ordinary skilled in the art that the disclosure is not limited to the embodiments described, which have been provided only for illustrative purposes.

The above-described embodiments may be recorded in computer-readable media including program instructions to implement various operations embodied by a computer. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The above-described devices may be configured to act as one or more software modules in order to perform the operations of the above-described embodiments, or vice versa. Although a few embodiments have been shown and described, it would be appreciated by those skilled in the art that changes may be made in these embodiments without departing from the principles of the invention, the scope of which is defined in the claims and their equivalents.

## Claims

1. A control method of a three dimensional (3D) printer for building a 3D object, the control method comprising:
forming first areas not adjacent to each other and solidifying the first areas; and
forming second areas adjacent to the solidified first areas, and solidifying the second areas.

2. The control method of claim 1, wherein each of the first area and the second area comprises at least one cell, which is a minimum sized picture element implemented by the 3D printer.

3. The control method of claim 1 or 2, wherein each of the first area and the second area comprises at least one block that includes a plurality of cells.

4. The control method of any one of claims 1 to 3, wherein the areas not adjacent to each other have borders of a predetermined size shared with neighboring areas.

5. The control method of any one of claims 1 to 4 comprising:
laminating a first layer and a second layer laminated on the first layer;
forming the first areas not adjacent to each other in the first layer and solidifying the first areas; and
forming the second areas adjacent to the solidified first areas in the first layer, and forming first areas in the second layer on top of the solidified first areas of the first layer.

6. The control method of claim 5, further comprising solidifying the second areas of the first layer together with the first areas of the second layer.

7. A three dimensional (3D) printer for building a 3D object, the 3D printer comprising:
an inkjet head equipped with multiple nozzles for spraying ink;
a light source for solidifying the sprayed ink;
a stage on which an object is formed with the ink sprayed from the inkjet head; and
a controller for performing 3D printing based on printing data, wherein the controller is arranged to form first areas not adjacent to each other and to solidify the first areas; and to form second areas adjacent to the solidified first areas and solidify the second areas.

8. The 3D printer of claim 7, wherein each of the first area and the second area comprises at least one cell, which is a minimum sized picture element implemented by the 3D printer.

9. The 3D printer of claim 7 or 8, wherein each of the first area and the second area comprises at least one block that includes a plurality of cells.

10. The 3D printer of any one of claims 7 to 9, wherein the areas not adjacent to each other have borders of a predetermined size shared with neighboring areas.

11. The 3D printer of any one of claims 7 to 10, wherein:
the controller is arranged to form the first areas not adjacent to each other in a first layer and to solidify the first areas, and to form the second areas adjacent to the solidified first areas in the first layer and to form first areas in a second layer on top of the solidified first areas of the first layer.

12. The 3D printer of claim 11, wherein the controller is arranged to control the second areas of the first layer and the second layer to be solidified together.
